# EUROPEAN PATENT SPECIFICATION

(11) **EP 4 369 950 B1**
(45) Date of publication and mention of the grant of the patent: **22.04.2026**
(21) Application number: 22797084.5
(22) Date of filing: 07.10.2022
(51) Int. Cl.: A23P 10/25, A23P 30/20, B29C 48/00

(54) **EXTRUSION APPARATUS**
EXTRUSIONSGERÄT
APPAREIL D'EXTRUSION

(30) Priority: 08.10.2021 DE 102021126206; 09.12.2021 EP 21213422
(43) Date of publication of application: 22.05.2024
(73) Proprietor: DSM IP Assets B.V., 6411 TE Heerlen (NL)
(72) Inventor: DRYJA, Patricia, 4303 Kaiseraugst (CH); URBAN, Kai, 4303 Kaiseraugst (CH); STEINEBRUNNER, Tony, 4303 Kaiseraugst (CH); SCHAEFER, Christian, 4303 Kaiseraugst (CH); HOLER, Rudolf, 4303 Kaiseraugst (CH)
(74) Representative: Lorenz Seidler Gossel Part. mbB
(86) International application number: PCT/EP2022/077925
(87) International publication number: WO 2023/057619

(56) References cited:
- EP-A1- 1 474 993
- GB-A- 2 517 191
- JP-A- 2017 094 172
- JP-A- S 564 416
- US-A- 3 753 637
- US-A- 5 814 350

## Description

The invention relates to an extrusion apparatus for the continuous production of solid food supplements, feed additives or pharmaceutical preparations, which comprise nutritional or pharmaceutical actives homogeneously dispersed in a carrier material matrix. The invention also relates to a method for the production of such preparations by extrusion.

It is known in the art to prepare food supplements, feed additives and pharmaceutical preparations for humans and animals, like preparations of water- and fat-soluble vitamins, polyunsaturated fatty acids, trace elements such as minerals, any derivatives and mixtures thereof, by extrusion. Exemplary publications comprise WO 2007/055815 A1, WO 2021/163836 A1, WO 2014/083065 A1, WO 2017/005622 A1, WO 2019/175326 A1, and GB 2 517 191 A. Prior art showing machinery for polymer extrusion comprises EP 1 474 993 A1, WO 2023/057619 A1, US 3 753 637 A, JP S56-4416 A, and US 5 814 350 A.

The mass of carrier material and active is in a viscous state during extrusion and solidifies through cooling and/or drying after it exits the extrusion die. At the exit of the extrusion die, where a cutter cuts pellets off the extruded material strand and a lateral flow of transportation fluid, typically transportation air, carries away the pellets from the die, however, the mass is often still viscous and sticky, especially in the core of the strand, despite the cooling and drying effect of the transportation fluid. This leads to a clogging of machine parts, especially cutter and extrusion die, and is detrimental to process stability and maintenance frequency. It also leads to agglomeration of product particles itself and is detrimental to product quality.

Depending on the kind of mass and the shape and size of the extrusion strand, adjusting temperature and flow speed of the transportation air or cooling of the knives of the cutter by separate streams of cooling air cannot always satisfactorily solve the problem.

The aim of the present invention is to provide a solution that allows reducing or even fully eliminating the described problem of a clogging of machine parts, especially knives and extrusion dies.

Against this background, the invention proposes an extrusion apparatus for the continuous production of solid food supplements, feed additives or pharmaceutical preparations, which comprise nutritional or pharmaceutical actives homogeneously dispersed in a carrier material matrix, the apparatus comprising: an extrusion die comprising at least one orifice of certain cross-sectional size and shape; a cutter arranged in front of the orifice and having pelletizing knives for cutting pellets off a material strand exiting the orifice; a means to generate a flow of transportation fluid through a fluid outlet such that the flow of transportation fluid laterally passes over the die in front of the orifice; and a means to generate a flow of cooling fluid through a fluid outlet onto the orifice in a vertical or angled direction.

The additional vertical or angled flow of cooling fluid increases cooling and drying speed of the extruded material, in particular at and around the core of the extruded strand, where cooling and drying action of the transportation air may be less pronounced. As the knives of the cutter are necessarily also positioned in or moved through the stream of cooling air, at least during pelletizing, cooling of the knives is an additional effect. These effects reduce the tendency of the knives and die to clog during operation and improves process stability. The tendency of product particles to agglomerate together is also reduced, leading to improved product quality.

The transportation fluid and the cooling fluid are, independently, preferably a gas, most preferably air. An inert gas like nitrogen can also be used. In one embodiment, the transportation fluid and the cooling fluid are the same fluid, in particular gas. They can be of different temperatures or of the same temperature, and can be provided from different sources or the same source. A liquid, like water, is usually less preferred.

The means to generate the lateral flow of transportation fluid preferably comprises a fan or other source of elevated or reduced pressure, like a pressure tank, and fluid control elements, like ducts and a fluid outlet, preferably a nozzle. In different embodiments, it can be configured to provide transportation fluid at the temperature of the material strand exiting the orifice, ±10°C and preferably ±5°C, at a temperature below the temperature of the material strand exiting the orifice, or at either of the two.

Likewise, the means to generate the vertical or angled flow of cooling fluid preferably comprises a fan or other source of elevated or reduced pressure, like a pressure tank, and fluid control elements, like ducts and the fluid outlet, preferably a nozzle. In different embodiments, it can be configured to provide cooling fluid at the temperature of the material strand exiting the orifice, ±10°C and preferably ±5°C, at a temperature below the temperature of the material strand exiting the orifice, or at either of the two.

The means to generate the lateral flow of transportation fluid and the means to generate the vertical or angled flow of cooling fluid can in one embodiment share certain elements, like a fan or other source of pressure, or certain fluid control elements, like ducts, or both.

Preferably, the means to generate the lateral flow of transportation fluid, the means to generate the vertical or angled flow of cooling fluid and the cutter are integral to the extrusion apparatus, i.e. are mechanically mounted thereon by screws, and not provided as separate parts that can freely be arranged. This is important for procedural stability and a precise collaboration of all functional parts.

Further preferably, at least parts of the means to generate the lateral flow of transportation fluid and the means to generate the vertical or angled flow of cooling fluid, especially the respective fluid outlets, together with the cutter, or at least its pelletizing knives, and the orifice(s) are comprised in an essentially closed space integral to the extrusion apparatus. This is necessary for security reasons alone due to the fast moving pelletizing knives, and also avoids a spread of product pellets.

The lateral direction is a direction essentially perpendicular to the direction of movement of a material strand exiting the orifice during operation of the apparatus. The vertical direction is a direction opposite to the direction of movement of a material strand exiting the orifice during operation of the apparatus. An angled direction is a direction at an angle smaller than 60°, preferably smaller 45°, and more preferably smaller 30° to the vertical direction.

In one embodiment, the extrusion die comprises a number of orifices and the means to generate a flow of cooling fluid is configured to generate a flow of cooling fluid onto all orifices in a vertical or angled direction. In this respect, one unitary flow or multiple partial flows can be generated, the latter for example by using multiple nozzles.

The direction of the material strand(s) exiting the orifice(s), in a preferred embodiment, is aligned to the main axis of the extruder, corresponding to the axis of an extruder screw and the material flow direction within the extruder.

In an alternative embodiment, the direction of the material strand(s) exiting the orifice(s) may be radial to the main axis of the extruder, by using a die construction where the first axial material flow is diverted to a radial direction.

The indications of lateral and vertical / angled directions herein refer to the direction of of the material strand(s) exiting the orifice(s), and are hence different, with regard to the orientation in respect to the main axis of the extruder, depending on whether the direction of the material strand(s) exiting the orifice(s) is axial or radial to the main axis of the extruder.

The cutter comprises one or more pelletizing knives. In one embodiment, especially when the direction of the material strand(s) exiting the orifice(s) is aligned to the main axis of the extruder, the cutter is a rotating cutter configured to rotate around an axis aligned to the main axis of the extruder and having one or more radially oriented pelletizing knives mounted thereon, which during operation of the apparatus can pelletize a material strand exiting the orifice axially by cut in a direction perpendicular to the main axis of the extruder. In another embodiment, especially when the direction of the material strand(s) exiting the orifice(s) is radial to the main axis of the extruder, the cutter is a rotating cutter configured to rotate around an axis aligned to the main axis of the extruder and having one or more axially oriented knives, that are tilted with respect to the tangential direction of movement, which during operation of the apparatus can pelletize a material strand exiting the orifice radially by tangential cut.

In one embodiment, the cutter is arranged on a movable carrier that allows movement in front of the die between an idle position, removed from the orifice, and an operative position, where the cutter pelletizes a material strand exiting the orifice when in operation.

In one embodiment, the fluid outlet, preferably the nozzle of the means to generate the cooling fluid flow is arranged on a movable carrier that allows movement in front of the die between an idle position, removed from the orifice, and an operative position, where a cooling air flow is directed onto the orifice when in operation.

In a particularly preferred embodiment, the cutter and the fluid outlet, preferably the nozzle of the means to generate the cooling fluid flow are arranged on a common movable carrier that allows movement in front of the die between an idle position, removed from the orifice, and an operative position, where a cooling air flow is directed onto the orifice when the means is in operation, and where the cutter pelletizes a material strand exiting the orifice when in operation. In such embodiment, a stream of cooling air can permanently be directed onto the cutting blades, whether in idle or operating position.

The movable carrier may be a slider configured for lateral movement in a plane that is perpendicular to the main axis of the extruder. Such slider for lateral movement can be suited for embodiments with an axial exit of the material strand(s) from the orifice(s).

In another embodiment, the movable carrier may be a carrier that can be moved in axial direction, either by a translational movement in a direction parallel to the main axis of the extruder, by a swivel around an axis perpendicular to the main axis of the extruder, or aby a combination of the two. Such slider for lateral movement can be suited for embodiments with a radial exit of the material strand(s) from the orifice(s).

In one embodiment, the apparatus further comprises a means to generate an additional flow of cooling fluid through a fluid outlet onto the cutter at a position removed from the orifice, preferably likewise in a vertical or angled direction. While the flow of cooling air that is directed onto the orifice in a vertical or angled direction inherently cools the pelletizing knives of the cutter, an additional stream of cooling air that is directed onto the cutter at a different po sition improves cooling action further.

For description of preferred embodiments of the means to generate the additional flow of cooling fluid, and the respective additional cooling fluid as such, reference can be made to the above description of preferred embodiments of the means to generate the flow of cooling fluid onto the orifice. It is most preferred that these two means share common elements, like fan or other source of pressure and fluid ducts. Preferably, the fluid outlet, preferably the nozzle of the additional means is also disposed on a movable carrier, as discussed above, and most preferably on a common movable carrier with the fluid outlet of the primary means and the cutter.

The invention further comprises a method for the continuous production of solid food supplement or pharmaceutical preparations, which comprise nutritional or pharmaceutical actives homogeneously dispersed in a carrier material matrix, wherein the method is carried out using an apparatus according to the invention, and wherein the method comprises: providing an extrudable material comprising nutritional or pharmaceutical actives; extruding the material through the orifice to generate a material strand; pelletizing the material strand with the cutter; laterally removing the pellets from in front of the orifice with a lateral flow of transportation fluid; and directing a flow of cooling fluid onto the orifice and the material stream exiting the orifice in a vertical or angled direction.

Preferred embodiments of the method include embodiments that have previously been described in the context of the apparatus, for example with regard to use, kind, type, temperature and flow direction of transportation and cooling fluids, or cutting direction of pelletizing knives.

The cutter and/or cooling fluid outlet(s) are in one embodiment moved between the idle and operative positions, preferably in a periodically repeating manner. The movement can be lateral.

In relative terms, it is preferred that the temperature of the cooling and transportation fluids is lower than the temperature of the extruded material when exiting the orifice, and that the temperature of the cooling fluid is the same or lower than the temperature of the transportation fluid. The difference to the temperature of the extruded material when exiting the orifice can be greater 10°C, preferably greater 15°C, more preferably greater 20°C.

In absolute terms, the extruded material can in one embodiment have a temperature from 15°C to 100°C, preferably 20°C to 70°C. The cooling air, transportation air, or both can have a temperature of smaller 30°C, preferably from -10°C to 25°C, more preferably 0°C to 15°C.

The method according to the invention is preferably a wet extrusion process, where the extruded material comprises a content of solvent, preferably water, of at least 5 wt.-%, preferably at least 8 wt.-%. In wet extrusion processes, the combined action of on the spot cooling and drying has a particularly emphasized effect.

This method of the invention hence, preferably, is different from a hot melt extrusion process, which typically involves solvent-free materials and temperatures of well above 100°C, for example 250°C or 300°C.

In one embodiment, the extruded material can be an oil-in-water emulsion having fat-soluble actives contained in water-encapsulated oil particles. Examples of such emulsions are described in WO 2007/055815 A1, WO 2021/163836 A1, WO 2014/083065 A1, WO 2017/005622 A1 and WO 2019/175326 A1.

The oils may be natural oils, in particular plant oils. Examples include olive oil, palm oil, cottonseed oil, rapeseed oil, canola oil, soybean oil or sunflower oil.

Actives are especially fat-soluble actives. Examples of fat-soluble actives that can be comprised in the oils include, for example polyunsaturated fatty acids and esters thereof, water- and/or fat-soluble vitamins or vitamin precursors. Typical examples of polyunsaturated fatty acids that may be used in the context include arachidonic acid, eicosapentaenoic acid, docosahexaenoic acid and gamma-linolenic acid. A typical example of a vitamin precursor that may be used in the context includes beta-carotene.

The term "fat-soluble vitamins" comprises for the purpose of the present invention in particular vitamins A, D, E and/or K, the corresponding provitamins and vitamin derivatives such as esters, especially alkyl esters, with an action resembling that of vitamin A, D, E or K, as well as any mixture thereof. Coenzyme Q10 is also included.

"Vitamin D" means either Vitamin D₃ (cholecalciferol) or Vitamin D₂ (ergocalciferol) or both.

"Vitamin D derivative" means any derivative of Vitamin D as for example 25-hydroxy vitamin D3 (so-called "HyD"), 1,25-dihydroxy vitamin D₃ or 24,25-dihydroxy vitamin D₃.

Vitamin K may be vitamin K₁ and/or vitamin K₂ and/or Vitamin K₃, especially vitamin K₃.

Especially preferred examples of fat-soluble vitamins are vitamin A, vitamin A acetate, vitamin A propionate, vitamin A palmitate, D-α-tocopherol, DL-α-tocopherol, D-α-tocopheryl acetate, DL-α-tocopheryl acetate, D-α-tocopheryl succinate, DL-α-tocopheryl succinate, vitamin D₃ and 25-hydroxy-vitamin D, as well as any mixture thereof. Most preferred are vitamin A acetate, vitamin D₃ and any mixture thereof.

As regards the amount of fat-soluble vitamin in the feed additive of the present invention, the amount of the free form of the fat-soluble vitamin is calculated directly, but the amount of a derivative of the fat-soluble vitamin is calculated in terms of the free form of the fat-soluble vitamin.

The amount of the fat-soluble vitamin is chosen in such a way so that its final amount in the extruded material is preferably in the range of from 1.0 to 60 weight-%, more preferably its final amount is in the range of from 5.0 to 50 weight-%, based on the total weight of the extruded material.

Oil-in-water emulsions are, however, not the only examples of materials to which the method of the invention can be applied. Other materials, especially materials for wet extrusion, like dispersions comprising particulate carrier particles of actives, micronutrient compositions, and compositions comprising water-soluble actives may also successfully be processed using a method of the invention.

The extruded materials, like oil-in-water emulsions, in typical embodiments further comprise thickening or gelling agents, especially polysaccharide-based or protein-based agents. Examples include natural gums, starches, modified food starches, lignosulfonates, pectins, agar-agar and gelatin.

Further details of the apparatus and method are discussed in the following with reference to a preferred example. The figures show:
- Figure 1:: a view onto the area in front of the die of an extrusion apparatus according to the invention, where cutter and cooling air outlets are in idle position;
- Figure 2:: the same view, with cutter and cooling air outlets in operative position;
- Figure 3:: front and side cut views of the die of an extrusion apparatus according to another embodiment of the invention.

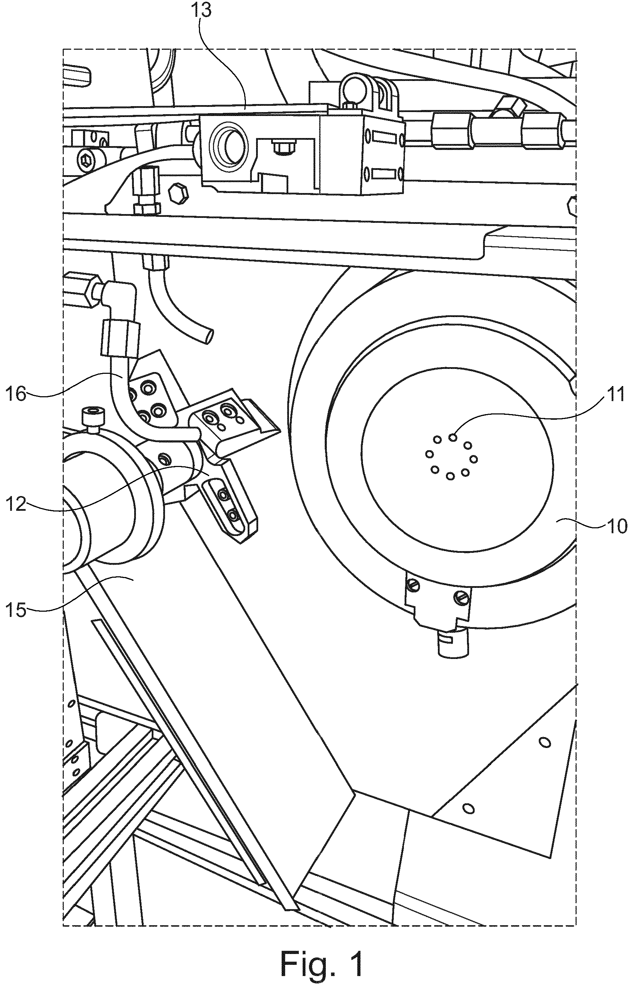

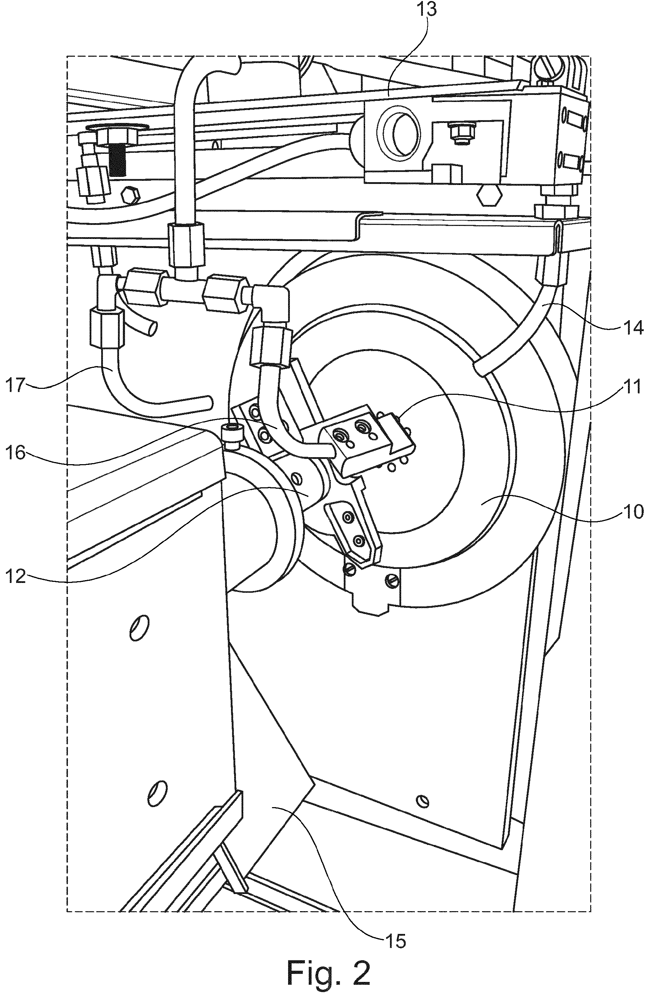

Figures 1 and 2 show the area in front of the die of an extrusion apparatus according to the invention.

The apparatus comprises an extrusion die (10) having circular orifices (11) for material exit. Behind the die (10) the apparatus typically comprises one or more feeds to provide material into a barrel, where one, two or multiple screws, driven by a mechanical drive (e.g. an electric, or hydraulic, or pneumatic motor), mix the material, convey it towards the die (10) and build up pressure. Optionally, means for heating and/or cooling the material can be disposed at some point of the barrel. The socket for holding the die (10) can also be heated or cooled. When in operation, extruded material exits the orifices (11) as strands of particular cross section.

The apparatus further comprises a rotating cutter (12) arranged in front of the orifice, configured to rotate around an axis aligned to the main axis of the extruder and parallel to the direction of the material strand propagation, and having radially oriented pelletizing knives (12a), which during operation of the apparatus can pelletize a material strand exiting the orifices (11) by lateral cut.

The cutter (12) is arranged on a slider (13) that allows laterally moving the cutter (12) in front of the die (10) between an idle position (Figure 1), where the cutter (12) is removed from the orifices (11), and an operative position (Figure 2), where the cutter (12) can cut the material strand exiting the orifices (11) into pellets when rotated.

A transportation fluid outlet pipe (14) guides a flow of transportation air to laterally pass over the die (10) in front of the orifices (11). When the apparatus is in operation, the transportation air can laterally carry away the pellets cut from the material strand from in front of the orifices (11). A baffle plate (15) is arranged at the opposite side of the die (10), with respect to the transportation fluid outlet pipe (14), to collect the carried away pellets and guide them towards a product exit at the bottom of the arrangement.

Next to the cutter (12), also two outlets (16, 17) of a cooling fluid supply system are mounted in the slider (13). Both outlets (16, 17) are configured such that a flow of cooling air is guided in a direction that is perpendicular to the surface of the die (10). Outlet (16) is positioned such that, when the slider (13) is in the operative position (Figure 2), the flow of cooling air is directed straight onto the orifices (11) and the centre of a material strand exiting therefrom, and inherently also the rotating knives of the cutter (12) at the position where they actually cut. Outlet (17) is positioned such that the flow of cooling air is directed to the rotating knives of the cutter (12), but not the orifices (11), even when the slider (13) is in the operative position (Figure 2).

The additional vertical flow of cooling air that exits outlet (16) increases cooling and drying speed of the extruded material, when compared to the cooling and drying by transportation air alone, in particular at and around the core of an extruded material strand. Further, it has an additional cooling effect on the knives of the cutter (12), when compared to the cooling by cooling air that exits outlet (17) alone.

These effects of the cooling air that exits outlet (16) can be of particular advantage in the extrusion of oil-in-water emulsions comprising fat-soluble nutritional or pharmaceutical actives dissolved in oil particles of the emulsion. The emulsions usually comprise a thickening or gelling agent, which renders them quite sticky when exiting the die at elevated temperature, and the vertical cooling air flow directly onto the face of the exiting material strand reduces stickiness and the tendency of the apparatus to clog.

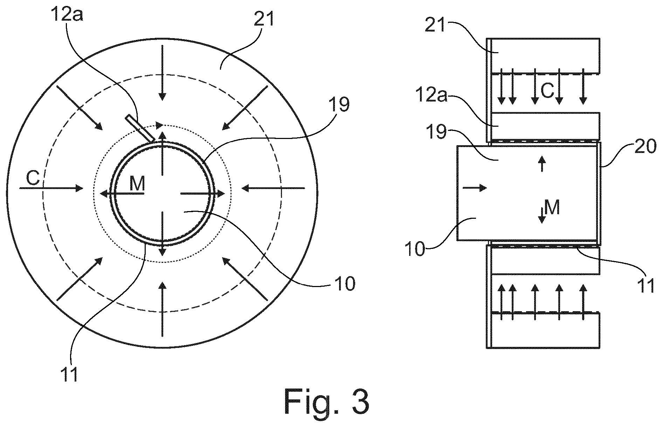

Figure 3 illustrates a different embodiment, where the direction of the material strand exiting the orifices (11) is not aligned to the main axis of the extruder, as in Figures 1 and 2, but where the orifices (11) are arranged such that material strands exit in a direction that is radial with respect to the main axis of the extruder.

This is facilitated by using a construction of the die (10) that diverts the in principle axial material flow (M) to a radial direction. Specifically, the die (10) comprises a cylinder (19) whose front surface is closed by a baffle plate (20) and whose shell surface is exposed in a way that pelletizing knives (12a) and streams of transportation and cooling liquid can pass the surface. The orifices (11) radially extend through the shell surface of the cylinder (19).

The rotating cutter, in this embodiment, is also arranged in front of the orifice and configured to rotate around an axis parallel to the main axis of the extruder, like in Figures 1 and 2, but the pelletizing knives (12a) are oriented axially instead of radially, and tilted with respect to the tangential direction of movement. During operation, the knives (12a) pass tightly over the shell surface of the cylinder (19) and can pelletize material strands exiting the radial orifices (11).

The cooling fluid supply system in this embodiment comprises a hollow ring chamber (21) coaxially surrounding the cylinder (19), leaving a gap for the knives (12a) and the material strands (M) to exit the orifices (11). The inner cylindrical surface of the hollow ring chamber (21) comprises a number of openings through which cooling air (C) can flow in a radial direction, opposite the direction of the material flow (M) from the orifices (11), such that streams of cooling air (C) are directed straight onto the orifices (11) and the centre of a material strands exiting therefrom, and inherently also the rotating knives (12a) of the cutter (12) at the position where they actually cut.

## Claims

1. An extrusion apparatus for the continuous production of solid food supplements, feed additives or pharmaceutical preparations, which comprise nutritional or pharmaceutical actives homogeneously dispersed in a carrier material matrix, the apparatus comprising:
an extrusion die (10) comprising at least one orifice (11) of certain cross-sectional size and shape;
a cutter (12) arranged in front of the orifice (11) and having pelletizing knives (12a) for cutting pellets off a material strand exiting the orifice (11); and,
a means to generate a flow of transportation fluid through a fluid outlet (14) such that the flow of transportation fluid laterally passes over the die (10) in front of the orifice (11);
**characterized in that**
the apparatus further comprises:
a means to generate a flow of cooling fluid through a fluid outlet (16) onto the orifice (11) in a vertical or angled direction.

2. The apparatus of claim 1, further comprising an additional means to generate an additional flow of cooling fluid through a fluid outlet (17) onto the cutter (12) at a position removed from the orifice (11), preferably likewise in a vertical or angled direction.

3. The apparatus of claim 2, wherein the means to generate the flow of cooling fluid onto the orifice (11) and the additional means to generate the additional flow of cooling fluid onto the cutter (12), preferably also the means to generate a flow of transportation air, share certain elements, like source of fluid pressure and/or fluid ducts.

4. The apparatus of any preceding claim, wherein the fluid outlet(s) (14, 16, 17) for the cooling air and/or the transportation air comprise a nozzle.

5. The apparatus of any preceding claim, wherein the direction of the material strand exiting the orifice (11) is aligned to the main axis of the extruder, wherein preferably the cutter (12) is a rotating cutter (12) configured to rotate around an axis is aligned to the main axis of the extruder and having one or more radially oriented pelletizing knives (12a).

6. The apparatus of any one of claims 1 to 4, wherein the direction of the material strand(s) exiting the orifice (11) is radial to the main axis of the extruder, wherein preferably the cutter (12) is a rotating cutter configured to rotate around an axis is aligned to the main axis of the extruder and having one or more axially oriented pelletizing knives (12a) that are tilted with respect to their tangential direction of movement.

7. The apparatus of any preceding claim, wherein the cutter (12) and the fluid outlet (16, 17) of the means to generate the cooling fluid flow, and preferably also the additional means to generate the additional cooling fluid flow, are arranged on a common movable carrier (13) that allows movement of the components in front of the die (10) between an idle position, removed from the orifice (11), and an operative position, where a cooling air flow is directed onto the orifice (11) when in operation, and where the cutter (12) pelletizes a material strand exiting the orifice (11) when in operation.

8. The apparatus of claim 7, wherein the cooling air flow is directed into the pelletizing knives (12a) of the cutter (12) at the position where the cutter (12) pelletizes the material strand.

9. The apparatus of any of the preceding claims, wherein the cooling fluid is configured to flow along a cooling flow axis, and the material strand is configured to be extruded through the at least one orifice (11) via an exit axis, wherein the cooling flow axis is oriented at an angle of less than 60°, or less than 45°, or less than 30° relative to the exit axis.

10. The apparatus of any of the preceding claims, wherein the cooling fluid is configured to flow along a cooling flow axis, and the material strand is configured to be extruded through the at least one orifice (11) via an exit axis, wherein the cooling flow axis and the exit axis are substantially anti-parallel.

11. The apparatus of any of the preceding claims, wherein the cooling fluid is configured to flow along a cooling flow axis, and the material strand is configured to be extruded through the at least one orifice (11) via an exit axis; wherein the cooling flow axis and the exit axis are substantially colinear.

12. A method for the continuous production of solid food supplement, feed additives or pharmaceutical preparations, which comprise nutritional or pharmaceutical actives homogeneously dispersed in a carrier material matrix, wherein the method is carried out using an apparatus of any preceding claims, and wherein the method comprises:
providing an extrudable material comprising nutritional or pharmaceutical actives;
extruding the material through the orifice (11) to generate a material strand;
pelletizing the material strand with the cutter (12); and,
laterally removing the pellets from in front of the orifice (11) with a lateral flow of transportation fluid;
**characterized in that**
the method further comprises:
directing a flow of cooling fluid onto the orifice (11) and the material stream exiting the orifice (11) in a vertical or angled direction.

13. The method of claim 12, wherein the transportation and cooling fluids are a gas, preferably air.

14. The method of any of claims 12 or 13, wherein the cooling fluid(s) and preferably also the transportation fluid are provided at a temperature of below the temperature of the material strand exiting the orifice (11), wherein the difference to the temperature of the extruded material when exiting the orifice (11) can be greater 10°C, preferably greater 15°C, more preferably greater 20°C, and/or at an absolute temperature of smaller 30°C, preferably -10°C to 25°C, more preferably 0°C to 15°C; and/or wherein the extruded material has a temperature from 15°C to 100°C, preferably 20°C to 70°C.

15. The method of any one of claims 12 to 14, wherein the extruded material is an oil-in-water emulsion having fat-soluble actives contained in water-encapsulated oil particles; and/or wherein the actives comprise polyunsaturated fatty acids or esters thereof, vitamins or vitamin precursors; and/or wherein the extruded material comprises thickening or gelling agents, especially polysaccharide-based or protein-based agents.

## Patentansprüche

1. Extrusionsvorrichtung zur kontinuierlichen Herstellung fester Nahrungsergänzungsmittel, Futtermittelzusatzstoffe oder pharmazeutischer Zubereitungen, die ernährungsphysiologische oder pharmazeutische Wirkstoffe umfassen, die homogen in einer Trägermaterialmatrix dispergiert sind, wobei die Vorrichtung umfasst:
eine Extrusionsdüse (10), die mindestens eine Öffnung (11) mit bestimmter Querschnittsgröße und -form umfasst;
einen vor der Öffnung (11) angeordneten Schneider (12) mit Pelletiermessern (12a) zum Abschneiden von Pellets von einem Materialstrang, der aus der Öffnung (11) austritt; und
ein Mittel zum Erzeugen eines Stroms von Transportfluid durch einen Fluidauslass (14), sodass der Strom von Transportfluid seitlich über die Düse (10) vor der Öffnung (11) hinwegströmt;
**dadurch gekennzeichnet, dass**
die Vorrichtung ferner umfasst:
ein Mittel zum Erzeugen eines Stroms von Kühlfluid durch einen Fluidauslass (16) auf die Öffnung (11) in vertikaler oder geneigter Richtung.

2. Vorrichtung nach Anspruch 1, ferner umfassend ein zusätzliches Mittel zum Erzeugen eines zusätzlichen Stroms von Kühlfluid durch einen Fluidauslass (17) auf den Schneider (12) an einer von der Öffnung (11) entfernten Position, vorzugsweise ebenfalls in vertikaler oder geneigter Richtung.

3. Vorrichtung nach Anspruch 2, wobei das Mittel zum Erzeugen des Stroms von Kühlfluid auf die Öffnung (11) und das zusätzliche Mittel zum Erzeugen des zusätzlichen Stroms von Kühlfluid auf den Schneider (12), vorzugsweise auch das Mittel zum Erzeugen eines Stroms von Transportluft, bestimmte Elemente gemeinsam nutzen, wie etwa eine Quelle für Fluiddruck und/oder Fluidleitungen.

4. Vorrichtung nach einem der vorstehenden Ansprüche, wobei der/die Fluidauslass/-auslässe (14, 16, 17) für die Kühlluft und/oder die Transportluft eine Düse umfassen.

5. Vorrichtung nach einem der vorstehenden Ansprüche, wobei die Richtung des aus der Öffnung (11) austretenden Materialstrangs auf die Hauptachse des Extruders ausgerichtet ist, wobei der Schneider (12) vorzugsweise ein rotierender Schneider (12) ist, der dazu eingerichtet ist, sich um eine Achse zu drehen, die auf die Hauptachse des Extruders ausgerichtet ist, und ein oder mehrere radial ausgerichtete Pelletiermesser (12a) aufweist.

6. Vorrichtung nach einem der Ansprüche 1 bis 4, wobei die Richtung des/der aus der Öffnung (11) austretenden Materialstrangs/-stränge radial zur Hauptachse des Extruders ist, wobei der Schneider (12) vorzugsweise ein rotierender Schneider ist, der dazu eingerichtet ist, sich um eine Achse zu drehen, die auf die Hauptachse des Extruders ausgerichtet ist, und ein oder mehrere axial ausgerichtete Pelletiermesser (12a) aufweist, die gegenüber ihrer tangentialen Bewegungsrichtung geneigt sind.

7. Vorrichtung nach einem der vorstehenden Ansprüche, wobei der Schneider (12) und der Fluidauslass (16, 17) des Mittels zum Erzeugen des Kühlfluidstroms, und vorzugsweise auch das zusätzliche Mittel zum Erzeugen des zusätzlichen Kühlfluidstroms, auf einem gemeinsamen beweglichen Träger (13) angeordnet sind, der eine Bewegung der Komponenten vor der Düse (10) zwischen einer Ruhestellung, die von der Öffnung (11) entfernt ist, und einer Betriebsstellung ermöglicht, in der im Betrieb ein Kühlluftstrom auf die Öffnung (11) gerichtet ist und in der der Schneider (12) im Betrieb einen aus der Öffnung (11) austretenden Materialstrang pelletiert.

8. Vorrichtung nach Anspruch 7, wobei der Kühlluftstrom an der Position, an der der Schneider (12) den Materialstrang pelletiert, in die Pelletiermesser (12a) des Schneiders (12) gerichtet ist.

9. Vorrichtung nach einem der vorstehenden Ansprüche, wobei das Kühlfluid dazu eingerichtet ist, entlang einer Kühlströmungsachse zu strömen, und der Materialstrang dazu eingerichtet ist, durch die mindestens eine Öffnung (11) entlang einer Austrittsachse extrudiert zu werden, wobei die Kühlströmungsachse in einem Winkel von weniger als 60°, oder weniger als 45°, oder weniger als 30° relativ zur Austrittsachse orientiert ist.

10. Vorrichtung nach einem der vorstehenden Ansprüche, wobei das Kühlfluid dazu eingerichtet ist, entlang einer Kühlströmungsachse zu strömen, und der Materialstrang dazu eingerichtet ist, durch die mindestens eine Öffnung (11) entlang einer Austrittsachse extrudiert zu werden, wobei die Kühlströmungsachse und die Austrittsachse im Wesentlichen antiparallel sind.

11. Vorrichtung nach einem der vorstehenden Ansprüche, wobei das Kühlfluid dazu eingerichtet ist, entlang einer Kühlströmungsachse zu strömen, und der Materialstrang dazu eingerichtet ist, durch die mindestens eine Öffnung (11) entlang einer Austrittsachse extrudiert zu werden; wobei die Kühlströmungsachse und die Austrittsachse im Wesentlichen kolinear sind.

12. Verfahren zur kontinuierlichen Herstellung fester Nahrungsergänzungsmittel, Futtermittelzusatzstoffe oder pharmazeutischer Zubereitungen, die ernährungsphysiologische oder pharmazeutische Wirkstoffe umfassen, die homogen in einer Trägermaterialmatrix dispergiert sind, wobei das Verfahren unter Verwendung einer Vorrichtung nach einem der vorstehenden Ansprüche durchgeführt wird und wobei das Verfahren umfasst:
Bereitstellen eines extrudierbaren Materials, das ernährungsphysiologische oder pharmazeutische Wirkstoffe umfasst;
Extrudieren des Materials durch die Öffnung (11), um einen Materialstrang zu erzeugen; Pelletieren des Materialstrangs mit dem Schneider (12); und
seitliches Entfernen der Pellets von vor der Öffnung (11) mit einem seitlichen Strom von Transportfluid;
**dadurch gekennzeichnet, dass**
das Verfahren ferner umfasst:
Lenken eines Stroms von Kühlfluid auf die Öffnung (11) und den aus der Öffnung (11) austretenden Materialstrom in vertikaler oder geneigter Richtung.

13. Verfahren nach Anspruch 12, wobei die Transport- und Kühlfluide ein Gas, vorzugsweise Luft, sind.

14. Verfahren nach einem der Ansprüche 12 oder 13, wobei das/die Kühlfluid(e) und vorzugsweise auch das Transportfluid bei einer Temperatur bereitgestellt werden, die unter der Temperatur des aus der Öffnung (11) austretenden Materialstrangs liegt, wobei die Differenz zur Temperatur des extrudierten Materials beim Austritt aus der Öffnung (11) größer als 10°C, vorzugsweise größer als 15°C, stärker bevorzugt größer als 20°C sein kann, und/oder bei einer absoluten Temperatur von weniger als 30°C, vorzugsweise -10°C bis 25°C, stärker bevorzugt 0°C bis 15°C; und/oder wobei das extrudierte Material eine Temperatur von 15°C bis 100°C, vorzugsweise 20°C bis 70°C, aufweist.

15. Verfahren nach einem der Ansprüche 12 bis 14, wobei das extrudierte Material eine Öl-in-Wasser-Emulsion ist, die fettlösliche Wirkstoffe enthält, die in wasserverkapselten Ölpartikeln enthalten sind; und/oder wobei die Wirkstoffe mehrfach ungesättigte Fettsäuren oder Ester davon, Vitamine oder Vitaminvorstufen umfassen; und/oder wobei das extrudierte Material Verdickungs- oder Geliermittel umfasst, insbesondere auf Polysaccharidbasis oder Proteinbasis.

## Revendications

1. Appareil d'extrusion pour la production continue de compléments alimentaires solides, d'additifs pour aliments pour animaux ou de préparations pharmaceutiques, qui comprennent des principes actifs nutritionnels ou pharmaceutiques dispersés de manière homogène dans une matrice de matériau support, l'appareil comprenant :
une filière d'extrusion (10) comprenant au moins un orifice (11) d'une certaine taille et forme de section transversale ;
un coupeur (12) disposé devant l'orifice (11) et comportant des couteaux de granulation (12a) pour couper des granulés d'un brin de matériau sortant de l'orifice (11) ; et
un moyen de générer un flux de fluide de transport à travers une sortie de fluide (14), de sorte que le flux de fluide de transport passe latéralement sur la filière (10) devant l'orifice (11) ;
**caractérisé en ce que**
l'appareil comprend en outre :
un moyen de générer un flux de fluide de refroidissement à travers une sortie de fluide (16) sur l'orifice (11) dans une direction verticale ou inclinée.

2. Appareil selon la revendication 1, comprenant en outre un moyen supplémentaire de générer un flux supplémentaire de fluide de refroidissement à travers une sortie de fluide (17) sur le coupeur (12) à une position éloignée de l'orifice (11), de préférence également dans une direction verticale ou inclinée.

3. Appareil selon la revendication 2, dans lequel le moyen de générer le flux de fluide de refroidissement sur l'orifice (11) et le moyen supplémentaire de générer le flux supplémentaire de fluide de refroidissement sur le coupeur (12), de préférence également le moyen de générer un flux d'air de transport, partagent certains éléments, tels qu'une source de pression de fluide et/ou des conduits de fluide.

4. Appareil selon l'une quelconque des revendications précédentes, dans lequel la ou les sorties de fluide (14, 16, 17) pour l'air de refroidissement et/ou l'air de transport comprennent une buse.

5. Appareil selon l'une quelconque des revendications précédentes, dans lequel la direction du brin de matériau sortant de l'orifice (11) est alignée sur l'axe principal de l'extrudeuse, dans lequel de préférence le coupeur (12) est un coupeur rotatif (12) configuré pour tourner autour d'un axe aligné sur l'axe principal de l'extrudeuse et comportant un ou plusieurs couteaux de granulation (12a) orientés radialement.

6. Appareil selon l'une quelconque des revendications 1 à 4, dans lequel la direction du ou des brins de matériau sortant de l'orifice (11) est radiale par rapport à l'axe principal de l'extrudeuse, dans lequel de préférence le coupeur (12) est un coupeur rotatif configuré pour tourner autour d'un axe aligné sur l'axe principal de l'extrudeuse et comportant un ou plusieurs couteaux de granulation (12a) orientés axialement, qui sont inclinés par rapport à leur direction tangentielle de mouvement.

7. Appareil selon l'une quelconque des revendications précédentes, dans lequel le coupeur (12) et la sortie de fluide (16, 17) du moyen de générer le flux de fluide de refroidissement, et de préférence également le moyen supplémentaire de générer le flux supplémentaire de fluide de refroidissement, sont disposés sur un support mobile commun (13) qui permet le déplacement des composants devant la filière (10) entre une position de repos, éloignée de l'orifice (11), et une position opératoire, dans laquelle un flux d'air de refroidissement est dirigé sur l'orifice (11) en fonctionnement, et dans laquelle le coupeur (12) granule en fonctionnement un brin de matériau sortant de l'orifice (11).

8. Appareil selon la revendication 7, dans lequel le flux d'air de refroidissement est dirigé dans les couteaux de granulation (12a) du coupeur (12) à la position où le coupeur (12) granule le brin de matériau.

9. Appareil selon l'une quelconque des revendications précédentes, dans lequel le fluide de refroidissement est configuré pour s'écouler le long d'un axe d'écoulement de refroidissement, et le brin de matériau est configuré pour être extrudé à travers ledit au moins un orifice (11) via un axe de sortie, dans lequel l'axe d'écoulement de refroidissement est orienté à un angle inférieur à 60°, ou inférieur à 45°, ou inférieur à 30° par rapport à l'axe de sortie.

10. Appareil selon l'une quelconque des revendications précédentes, dans lequel le fluide de refroidissement est configuré pour s'écouler le long d'un axe d'écoulement de refroidissement, et le brin de matériau est configuré pour être extrudé à travers ledit au moins un orifice (11) via un axe de sortie, dans lequel l'axe d'écoulement de refroidissement et l'axe de sortie sont sensiblement antiparallèles.

11. Appareil selon l'une quelconque des revendications précédentes, dans lequel le fluide de refroidissement est configuré pour s'écouler le long d'un axe d'écoulement de refroidissement, et le brin de matériau est configuré pour être extrudé à travers ledit au moins un orifice (11) via un axe de sortie ; dans lequel l'axe d'écoulement de refroidissement et l'axe de sortie sont sensiblement colinéaires.

12. Procédé pour la production continue de compléments alimentaires solides, d'additifs pour aliments pour animaux ou de préparations pharmaceutiques, qui comprennent des principes actifs nutritionnels ou pharmaceutiques dispersés de manière homogène dans une matrice de matériau support, dans lequel le procédé est mis en œuvre à l'aide d'un appareil selon l'une quelconque des revendications précédentes, et dans lequel le procédé comprend :
la fourniture d'un matériau extrudable comprenant des principes actifs nutritionnels ou pharmaceutiques ;
l'extrusion du matériau à travers l'orifice (11) pour générer un brin de matériau ; la granulation du brin de matériau avec le coupeur (12) ; et
l'évacuation latérale des granulés depuis l'avant de l'orifice (11) au moyen d'un flux latéral de fluide de transport ;
**caractérisé en ce que**
le procédé comprend en outre :
le fait de diriger un flux de fluide de refroidissement sur l'orifice (11) et le flux de matériau sortant de l'orifice (11) dans une direction verticale ou inclinée.

13. Procédé selon la revendication 12, dans lequel les fluides de transport et de refroidissement sont un gaz, de préférence de l'air.

14. Procédé selon l'une quelconque des revendications 12 ou 13, dans lequel le ou les fluides de refroidissement, et de préférence également le fluide de transport, sont fournis à une température inférieure à la température du brin de matériau sortant de l'orifice (11), dans lequel la différence par rapport à la température du matériau extrudé lorsqu'il sort de l'orifice (11) peut être supérieure à 10°C, de préférence supérieure à 15°C, plus préférablement supérieure à 20°C, et/ou à une température absolue inférieure à 30°C, de préférence de -10°C à 25°C, plus préférablement de 0°C à 15°C ; et/ou dans lequel le matériau extrudé a une température de 15°C à 100°C, de préférence de 20°C à 70°C.

15. Procédé selon l'une quelconque des revendications 12 à 14, dans lequel le matériau extrudé est une émulsion huile-dans-eau comportant des principes actifs liposolubles contenus dans des particules d'huile encapsulées dans l'eau ; et/ou dans lequel les principes actifs comprennent des acides gras polyinsaturés ou leurs esters, des vitamines ou des précurseurs de vitamines ; et/ou dans lequel le matériau extrudé comprend des agents épaississants ou gélifiants, en particulier des agents à base de polysaccharides ou de protéines.
